# EUROPÄISCHE PATENTSCHRIFT

(11) **EP 1 394 451 B1**
(45) Veröffentlichungstag und Bekanntmachung des Hinweises auf die Patenterteilung: **24.01.2007**
(21) Anmeldenummer: 02019177.1
(22) Anmeldetag: 02.09.2002
(51) Int. Cl.: F16J 15/16, F01D 25/18, F02C 6/12, F01D 11/00

(54) **Wellenabdichtung für Turbolader**
Shaft seal for turbocharger
Dispositif d'étanchéité pour arbre de turbosoufflante

(43) Veröffentlichungstag der Anmeldung: 03.03.2004
(73) Patentinhaber: BorgWarner Inc., Auburn Hills, MI 48326-2872 (US)
(72) Erfinder: Frankenstein, Dirk, 67550 Worms (DE)
(74) Vertreter: Kügele, Bernhard

(56) Entgegenhaltungen:
- DD-A- 62 972
- DE-A- 2 322 458
- DE-C- 937 800
- FR-A- 1 132 266
- US-A- 2 210 723
- US-A- 2 509 461
- US-A- 3 627 390
- US-A- 4 157 834
- US-A- 4 196 910
- US-A- 4 406 460
- US-A- 5 979 903

## Beschreibung

### Gebiet der Erfindung

Die Erfindung bezieht sich auf einen Turbolader mit einer Rotorwelle, die eine Rotationsachse definiert. Ein Ende der Rotorwelle ragt in ein Turbinengehäuse mit mindestens einem Zufuhrkanal für Abgas, in welchem mindestens ein Turbinenrotor an dieser Rotorwelle befestigt und somit drehbar gelagert ist, und dessen Peripherie das Abgas zuführbar ist. Ferner ist ein Kompressorgehäuse mit mindestens einem Zufuhrkanal für Luft vorgesehen, in welches das andere Ende der Rotorwelle ragt. An diesem anderen Ende der Rotorwelle ist wenigstens ein Kompressorrotor befestigt, und dessen Peripherie wird die Luft zugeführt. Eine Lageranordnung für die Rotorwelle ist mindestens im Bereiche des Kompressorrotors vorgesehen, welche Lageranordnung eine Dichtungseinrichtung aufweist (vgl. US-A-4,196,910).

### Hintergrund der Erfindung

Bei Turboladern dieser Art kommt es im Verlaufe des Betriebes zu einer Erscheinung, die man "Blowby" nennt. Dabei kommt es bei höherem Abgasdruck, d.h. bei höheren Umdrehungszahlen, zu einer Tendenz, daß das Abgas aus dem Turbinengehäuse über unvermeidliche Leckstellen gegen die Kompressorseite hin strömt. Dabei tritt das von der Turbinenseite her strömende Gas in das Kompressorgehäuse ein, wird dem vom Kompressor versorgten Verbrennungsmotor zugeführt und verschlechtert somit sein Emissionsverhalten. Dies verschärft sich noch, wenn an den turbinenseitigen Lagern ein Überdruck zugeführt wird, so daß (vom Schmiermittel der Lager) ölhaltige Luft an die Seite des Kompressors gelangt.

### Kurzfassung der Erfindung

Der Erfindung liegt die Aufgabe zugrunde, den Zutritt von verunreinigtem Gas zur Kompressorseite zu verringern oder zu unterbinden. Der Erfindung liegt dabei die Erkenntnis zugrunde, daß der Eintrag an "Blowby" in das Kompressorgehäuse vor allem über die kompressorseitigen Lager erfolgt. Diese Lager aber weisen bereits herkömmlich eine Dichtung auf. Eine allenfalls Reibung erzeugende Dichtung stellt nicht nur einen Abnützungsteil dar, sondern verringert auch den Wirkungsgrad.

Erfindungsgemäß wird die genannte Aufgabe dadurch gelöst, daß die Dichtungseinrichtung zusätzlich zu einer ersten Dichtung eine an der Rotorwelle befestigte und mit ihrem frei beweglichen, von der Rotorwelle vorragenden Ende fliehkraftabhängig an eine Lagerinnenwand drückbare Lippendichtung aufweist. Dadurch, daß nun die Lippendichtung praktisch automatisch nur dann zum Einsatz, d.h. zur Anlage an die gegenüberliegende Innenwand des Lagers kommt, wenn die Fliehkraft auf Grund hoher Umdrehungszahlen groß genug ist - und dies ist gerade der Betriebszustand, bei dem der Eintrag an "Blowby"-Gasen besonders kritisch wird -, um die Lippendichtung aus ihrer Ruhelage, in der sie die Innenwand des Lagers nicht oder nur schwach berührt, in ihre Dichtungslage zu bringen, in der sie gegen die Innenwand des Lagers angepreßt ist.

Um die Reibung an der Lagerinnenwand möglichst gering zu halten, ist es vorteilhaft, wenn die Lippendichtung im von Fliehkraft unbelasteten Zustand sich etwa parallel zu Richtung der Rotationsachse erstreckt.

### Kurzbeschreibung der Zeichnungen

Weitere Einzelheiten der Erfindung ergeben sich an Hand der nachfolgenden Beschreibung eines in der Zeichnung schematisch dargestellten bevorzugten Ausführungsbeispieles. Es zeigen:
- Fig. 1: einen Axialschnitt durch die wesentlichen Teile eines Turboladers; und
- Fig. 2: eine vergrößerte Darstellung des Details X der Fig. 1 in einer halben, an der Rotationsachse R endenden Darstellung.

### Detaillierte Beschreibung der Zeichnungen

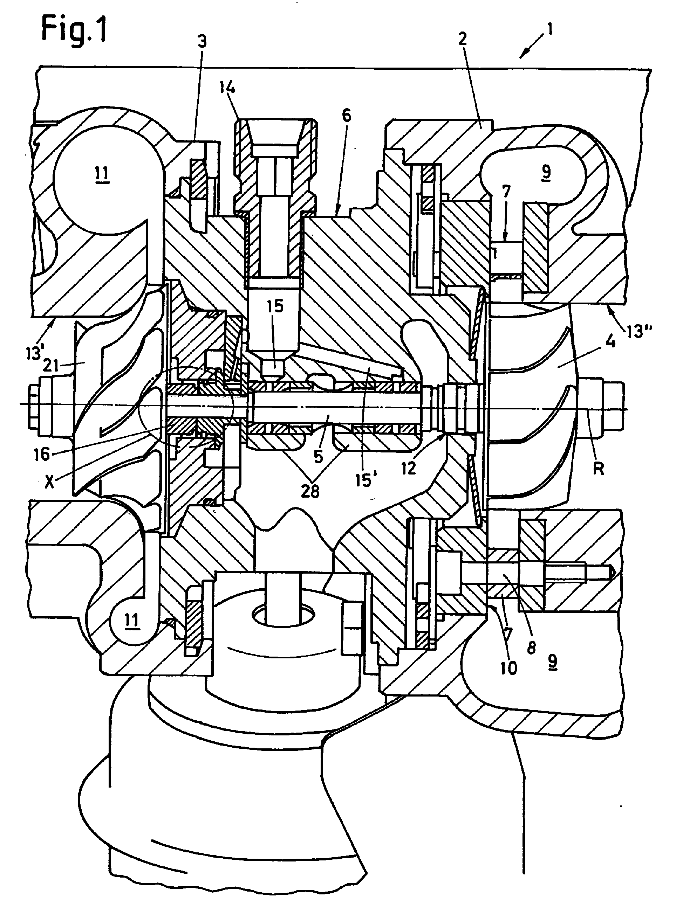

Gemäß Fig. 1 weist ein Turbolader 1 (nur der Mittelteil ist dargestellt, wogegen Teile an de linken und rechten Seite abgerissen sind) in üblicher Weise einen Turbinengehäuseteil 2 und einen damit verbundenen Kompressorgehäuseteil 3 auf, die entlang einer Rotationsachse R angeordnet sind. Der Turbinengehäuseteil 2 im Schnitt zeigt den an der Achse R gelegenen Turbinenrotor 4, der am einen Ende einer Rotorwelle 5 befestigt ist, welche in einem Gehäusemittelteil 6 gelagert ist. Das Turbinengehäuse 2 weist einen etwa ringförmigen Zufuhrkanal 9 für Abgas auf, um dem Turbinenrotor 4 Abgas aus einem Verbrennungsmotor zuzuführen. Die Zufuhr erfolgt bei der dargestellten Ausführung über die Schaufeln 7 eines an sich bekannten (und daher hier nicht im einzelnen beschriebenen) Leitgitters variabler Geometrie, die über in einem Schaufellagerring 10 gelagerte Verstellwellen 8 hinsichtlich ihrer Lage (mehr radial zum Rotor 4 oder mehr tangential) einstellbar sind. Es versteht sich, daß auch mehr als ein Zufuhrkanal 9 vorgesehen sein kann, insbesondere wenn etwa mehrere Turbinenrotoren an der Welle 5 befestigt sein sollten.

Auf diese Weise wird über den Turbinenrotor 4 ein auf derselben Rotorwelle 5, und zwar an deren anderen Ende, sitzender Kompressorrotor 21 angetrieben. Dieser Kompressorrotor 21 saugt Luft über einen ihn umgebenden Zufuhrkanal 11 an, verdichtet sie und bläst sie durch einen Axialstutzen 13' aus. In ähnlicher Weise besitzt auch das Turbinengehäuse 2 einen Axialstutzen 13".

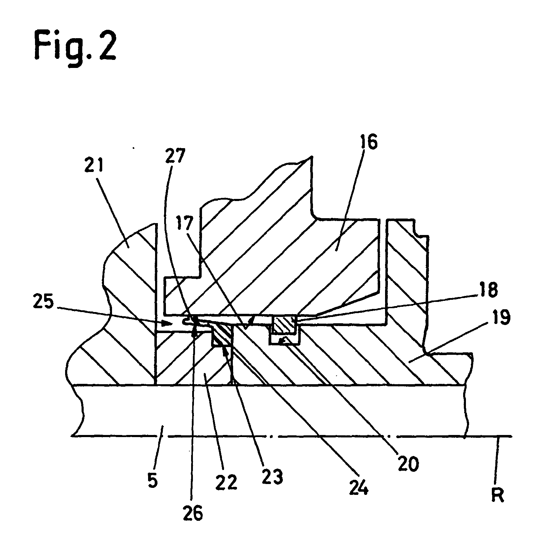

Die Welle 5 ist durch eine Durchführung 12 hindurch in den Turbinengehäuseteil 2 geführt, wo der Turbinenrotor 4 an ihrem Ende befestigt ist. Innerhalb des Lagergehäuses bzw. des Gehäusemittelteils 6 befinden sich die Lager 28 der Welle 5, denen Schmiermittel mit Überdruck über einen vertikalen Ölzulauf-Einschraubstutzen 14 und Bohrungen 15, 15' zugeführt wird. Um zu verhindern, daß Schmiermittel aus diesem Gehäusemittelteil 6 etwa über eine Durchführung 16 zum Kompressorrotor 21 gelangt, und ohne allzu große Reibungsverluste und Abnützung in Kauf nehmen zu müssen, ist die nachfolgend an Hand der Fig. 2 beschriebene Ausgestaltung vorgesehen.

Im Bereiche der Durchführung 16 ist gemäß Fig. 2 an der Innenwand dieser Durchführung 16 ein Kolbenring 18 vorgesehen. Um einen Labyrinthdichtungseffekt zu erzielen, wird dieser Kolbenring 18 vorzugsweise in eine Nut 20 eines mit der Rotorwelle 5 umlaufenden Drehteiles 19 eintauchen. Um nun eine fliehkraftabhängige Dichtwirkung zu erzielen, ist ein weiterer Drehteil 22 vorgesehen, der eine Schulternut 23 aufweist, In diese Nut 23 ist zwischen die beiden Drehteile 19, 22 eine Lippendichtung 24 eingesetzt, deren Basisring mit etwa der Nut 23 entsprechendem Querschnitt eine frei in den Spaltraum 25 zwischen den Drehteil 22 und die Deckelinnenwand 17 bzw. Innenwand 17 der Durchführung 17 ragende Dichtungslippe 26 trägt.

Es ist ersichtlich, daß der Spaltraum 25 im Bereiche der Lippendichtung 26 weiter ist als im Bereiche der erstgenannten Dichtung mit Kolbenring 18 und Nut 20. Dadurch wird Raum für eine gewisse fliehkraftabhängige Beweglichkeit der Dichtungslippe 26 geschaffen. Dabei ist die Dichtungslippe 26 zweckmäßig so an den den Ring 24 bildenden Basiskörper angeschlossen, daß sie sich, wie ersichtlich, vorzugsweise etwa parallel zu Richtung der Rotationsachse R erstreckt. Daher wird sie sich fest an die Innenwand 17 der Durchführung 16 erst dann anlegen, wenn die durch die Drehung der Welle 5 erzeugte Fliehkraft ausreichend groß ist. Dabei ist zu überlegen, daß die Dichtungslippe 26 im allgemeinen selbst ringförmig die Rotationsachse R umgeben wird, somit also eine gewisse Steifheit besitzt, so daß eine feste Anlage unter Reibung erst bei relativ hohen Tourenzahlen erfolgt.

Natürlich hat man es in der Hand, die Lippe schon bei niedrigeren oder höheren Tourenzahlen an die Innenwand anlegen zu lassen, indem man ihr ein entsprechendes Profil, also größere oder geringere Dicke, Unterteilung in einzelne Umfangslappen od.dgl., verleiht. Vorteilhaft ist es beispielsweise, wenn die Dichtlippe 26 an der der Innenwand 17 der Durchführung 16 zugekehrten Seite eine, insbesondere wulstartige, Verdickung 27 aufweist, so daß die Reibfläche, wenigstens bei niedrigeren Tourenzahlen bzw. im mittleren Tourenzahlenbereich gering ist.

Im Rahmen der Erfindung sind zahlreiche Abwandlungen möglich; so wurde bereits erwähnt, daß die Lippendichtung 26 verschiedene Formen annehmen kann. Sie ist in Fig. 2 dem Kompressorrotor 21 zugewandt, könnte jedoch auch umgekehrt, d.h. gegen den Turbinenrotor 4 gekehrt sein. Ferner muß die Rotorwelle 5 nicht unbedingt mit den Drehteilen 19, 22 versehen werden, sondern könnte auch selbst die Nut 23 aufweisen.

Auch wurde der allgemeine Begriff "Durchführung" für jene Öffnung verwendet, durch welche die Welle 5 aus dem Gehäusemittelteil 6 einerseits zum Kompressorrotor 21 und anderseits zum Turbinenrotor 4 gelangt. Eine solche "Durchführung" kann als Üffnung eines Gehäusedeckels ausgeführt sein, könnte gewünschtenfalls aber auch Lagerungsfunktion haben.

## Patentansprüche

1. Turbolader (1), der folgendes aufweist:
eine Rotorwelle (5), die eine Rotationsachse (R) definiert,
ein Turbinengehäuse (2) mit mindestens einem Zufuhrkanal (9) für Abgas, in welches ein Ende der Rotorwelle (5) ragt, und in welchem
mindestens ein Turbinenrotor (4) an dieser Rotorwelle (5) befestigt und so drehbar gelagert ist, und dessen Peripherie das Abgas zuführbar ist,
ein Kompressorgehäuse (3) mit mindestens einem Zufuhrkanal (11) für Luft, in welches das andere Ende der Rotorwelle (5) ragt, an dem
wenigstens ein Kompressorrotor (21) befestigt ist und dessen Peripherie die Luft zuführbar ist, sowie mit
einer Durchführung (16) für die Rotorwelle im Bereiche des Kompressorrotors (21), welche Durchführung (16) eine Dichtungseinrichtung (18-27) aufweist,
**dadurch gekennzeichnet, daß**
die Dichtungseinrichtung (18-27) zusätzlich zu einer ersten Dichtung (18, 20) eine an der Rotorwelle (5) befestigte und mit ihrem frei beweglichen, von der Rotorwelle (5) vorragenden Ende fliehkraftabhängig an eine Innenwand (17) der Durchführung (16) drückbare Lippendichtung (26) aufweist.

2. Turbolader (1) nach Anspruch 1, **dadurch gekennzeichnet, daß** die Lippendichtung (26) im von Fliehkraft unbelasteten Zustand sich etwa parallel zu Richtung der Rotationsachse (R) erstreckt.

3. Turbolader (1) nach Anspruch 1 oder 2, **dadurch gekennzeichnet, daß** die Lippendichtung (26) im Bereiche ihres freien Endes einen sich unter Fliehkrafteinwirkung gegen die Innenwand (17) der Durchführung (16) pressende Verdickung (27), wie einen Wulst, aufweist.

4. Turbolader (1) nach einem der vorhergehenden Ansprüche, **dadurch gekennzeichnet, daß** die erste Dichtung (18, 20) die Anordnung einer Labyrinthdichtung aufweist.

5. Turbolader (1) nach einem der vorhergehenden Ansprüche, **dadurch gekennzeichnet, daß** die erste Dichtung (18, 20) einen sich an die Innenwand (17) der Durchführung (16) anlegenden Kolbenring (18) aufweist.

6. Turbolader (1) nach den Ansprüchen 4 und 5, **dadurch gekennzeichnet, daß** der Kolbenring (18) zur labyrinthartigen Umlenkung allfällig eindringenden Fluids in eine Nut (20) der Rotorwelle (5) oder eines mit ihr verbundenen Drehteils (19) eintaucht.

7. Turbolader (1) nach einem der vorhergehenden Ansprüche, **dadurch gekennzeichnet, daß** der Spalt (25) der Durchführung (16) im Bereich der ersten Dichtung (18, 20) enger ist als im Bereich der Lippendichtung (26).

## Claims

1. Turbocharger (1) which comprises the following:
a rotor shaft (5) which defines an axis (R) of rotation,
a turbine housing (2) having at least one feed channel (9) for exhaust gas, into which one end of the rotor shaft (5) projects, and in which
at least one turbine rotor (4) is fixed to this rotor shaft (5) and is thus rotatably mounted, and
to the periphery of which the exhaust gas can be fed,
a compressor housing (3) having at least one feed channel (11) for air, into which the other end of the rotor shaft (5) projects, to which end
at least one compressor rotor (21) is fixed and to the periphery of which the air can be fed, and having
a passage (16) for the rotor shaft in the region of the compressor rotor (21), which passage (16) has a sealing device (18-27),
**characterized in that**,
in addition to a first seal (18, 20), the sealing device (18-27) has a lip seal (26) which is fixed to the rotor shaft (5) and the freely movable end of which, projecting from the rotor shaft (5), can be pressed against an inner wall (17) of the passage (16) as a function of centrifugal force.

2. Turbocharger (1) according to Claim 1, **characterized in that**, when not subjected to centrifugal force, the lip seal (26) extends approximately parallel to the direction of the axis (R) of rotation.

3. Turbocharger (1) according to Claim 1 or 2, **characterized in that**, in the region of its free end, the lip seal (26) has a thicker part (27), such as a bead, pressing against the inner wall (17) of the passage (16) under the action of centrifugal force.

4. Turbocharger (1) according to any of the preceding claims, **characterized in that** the first seal (18, 20) has the arrangement of a labyrinth seal.

5. Turbocharger (1) according to any of the preceding claims, **characterized in that** the first seal (18, 20) has a piston ring (18) adjacent to the inner wall (17) of the passage (16).

6. Turbocharger (1) according to Claims 4 and 5, **characterized in that**, for labyrinth-like deflection of any penetrating fluid, the piston ring (18) dips into a groove (20) of the rotor shaft (5) or of a rotating part (19) connected to it.

7. Turbocharger (1) according to any of the preceding claims, **characterized in that** the gap (25) of the passage (16) is narrower in the region of the first seal (18, 20) than in the region of the lip seal (26).

## Revendications

1. Turbocompresseur de suralimentation (1), présentant les propriétés suivantes :
un arbre de rotor (5), définissant un axe de rotation (R),
un carter de turbine (2), avec au moins un canal d'amenée (9) pour des gaz d'échappement, dans lequel pénètre une extrémité de l'arbre de rotor (5), et dans lequel
au moins un rotor de turbine (4) est fixé sur cet arbre de rotor (5) et est ainsi monté à rotation, et à la périphérie duquel les gaz d'échappement peuvent être amenés,
un carter de compresseur (3) comprenant au moins un canal d'amenée (11) pour l'air, dans lequel l'autre extrémité de l'arbre de rotor (5) pénètre, auquel
au moins un rotor de compresseur (21) est fixé et à la périphérie duquel de l'air peut être amené, ainsi qu'avec
un passage (16) pour l'arbre de rotor dans des zones du rotor de compresseur (21), ledit passage (16) présentant un dispositif d'étanchéité (18 à 27),
**caractérisé en ce que**
le dispositif d'étanchéité (18 à 27) présente, en plus d'un premier joint d'étanchéité (18, 20), un joint d'étanchéité à lèvre (26), fixé à l'arbre de rotor (5) et pouvant être pressé, par son extrémité librement mobile, faisant saillie de l'arbre de rotor (5), en fonction de la force centrifuge, sur une paroi intérieure (17) du passage (16).

2. Turbocompresseur de suralimentation (1) selon la revendication 1, **caractérisé en ce que** le joint d'étanchéité à lèvre (26), à l'état non chargé par la force centrifuge, s'étend à peu près parallèlement à la direction de l'axe de rotation (R).

3. Turbocompresseur de suralimentation (1) selon la revendication 1 ou 2, **caractérisé en ce que** le joint d'étanchéité à lèvre (26), dans des zones de son extrémité libre, présente un épaississement (27), tel qu'un bourrelet, pressant contre la paroi intérieure (17) du passage (16), sous l'effet de la force centrifuge.

4. Turbocompresseur de suralimentation (1) selon l'une des revendications précédentes, **caractérisé en ce que** le premier joint d'étanchéité (18, 20) présente l'agencement d'un joint d'étanchéité à labyrinthe.

5. Turbocompresseur de suralimentation (1) selon l'une des revendications précédentes, **caractérisé en ce que** le premier joint d'étanchéité (18, 20) présente un segment de piston (18), appuyant sur la paroi intérieure (17) du passage (16).

6. Turbocompresseur de suralimentation (1) selon les revendications 4 et 5, **caractérisé en ce que** le segment de piston (18), pour dévier, à la façon d'un labyrinthe, l'éventuel fluide pénétrant, pénètre dans une rainure (20), de l'arbre de rotor (5) ou d'une partie rotative (19) lui étant reliée.

7. Turbocompresseur de suralimentation (1) selon l'une des revendications précédentes, **caractérisé en ce que** l'interstice (25) du passage (16), dans la zone du premier joint d'étanchéité (18, 20), est plus étroit que dans la zone du joint d'étanchéité à lèvre (26).
